(19) Europäisches Patentamt
European Patent Office
Office européen des brevets

(11) EP 1 458 783 B1

(12) **EUROPÄISCHE PATENTSCHRIFT**

(45) Veröffentlichungstag und Bekanntmachung des Hinweises auf die Patenterteilung:
**07.05.2008 Patentblatt 2008/19**

(21) Anmeldenummer: **02792850.6**

(22) Anmeldetag: **02.12.2002**

(51) Int Cl.:
***C08G 61/00*** *(2006.01)*

(86) Internationale Anmeldenummer:
**PCT/EP2002/013584**

(87) Internationale Veröffentlichungsnummer:
**WO 2003/048225 (12.06.2003 Gazette 2003/24)**

(54) **PROZESS ZUR HERSTELLUNG VON ARYL-ARYL GEKOPPELTEN VERBINDUNGEN**
PROCESS FOR PRODUCING ARYL-ARYL COUPLED COMPOUNDS
PROCESSUS DE PRODUCTION DE COMPOSES COUPLES ARYLE-ARYLE

(84) Benannte Vertragsstaaten:
**DE FR GB IE NL**

(30) Priorität: **06.12.2001 DE 10159946**

(43) Veröffentlichungstag der Anmeldung:
**22.09.2004 Patentblatt 2004/39**

(73) Patentinhaber: **Merck Patent GmbH**
**64293 Darmstadt (DE)**

(72) Erfinder:
- **TREACHER, Kevin**
  **Northwich, Cheshire CW8 4TG (GB)**
- **STÖSSEL, Philipp**
  **65929 Frankfurt (DE)**
- **SPREITZER, Hubert**
  **68519 Viernheim (DE)**
- **BECKER, Heinrich**
  **61479 Glashütten (DE)**
- **FALCOU, Aurélie**
  **55128 Mainz (DE)**

(56) Entgegenhaltungen:
**DE-A- 19 846 768**
**US-A- 5 919 930**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 458 783 B1

## Beschreibung

Diese Erfindung bezieht sich auf die Herstellung Aryl-Aryl gekoppelter Verbindungen und Materialien. Diese Materialien spielen eine bedeutende Rolle in der Industrie, so als Flüssigkristalle, Pharmaka und Agrochemikalien, um nur ein Paar Anwendungsfelder zu nennen. Vor allem auch in dem stark wachsenden Feld für organische Halbleiter (z. B. Anwendungen in organischen bzw. polymeren Leuchtdioden, organischen Solarzellen, organischen ICs) sind gerade diese Verbindungen von herausragender Bedeutung.

Für die Darstellung solcher Verbindungen sind verschiedenartigste Alternativen bekannt, die jedoch nicht für alle Fälle eine - z. B. technisch, ökonomisch und ökologisch - befriedigende Lösung anbieten. Bei vielen Verfahren treten Fehlprodukte bzw. Fehlreaktionen auf, die abgetrennt und aufwendig entsorgt werden müssen, oder die nicht entfernt werden können und dann zu Problemen in der Verwendung des Materials führen können.

Besonders wichtig ist die Effizienz (Umsatzgrad) des Verfahrens, wenn es sich um die Umsetzung einer oder mehrerer multifunktioneller Verbindung(en) handelt. Ein Beispiel dieser Art Reaktion ist die Umsetzung einer multifunktionellen Verbindung mit einer monofunktionellen Verbindung, was zu einem diskreten Molekül führt. Ein weiteres Beispiel ist eine Polymerisation, wobei eine oder mehrere multifunktionelle Verbindung(en) mit einer oder mehreren weitere(n) multifunktionellen Verbindung(en) umgesetzt werden. Bei vielen Anwendungen der Polymere ist ein hohes Molekulargewicht erforderlich, um die gewünschten physikalischen Eigenschaften, z.B. Filmbildung, Flexibilität, mechanische Stabilität und weitere zu erreichen. Besonders bei organischen Halbleitern werden die elektrischen Eigenschaften stark durch das Molekulargewicht beeinflußt - meistens ist ein sehr hohes Molekulargewicht erforderlich, um u.a. Defekte wie Kurzschlüsse im elektrischen Device zu verhindern. Für diese Anwendung ist weiterhin eine hohe Reproduzierbarkeit des Prozesses erforderlich. Der Polymerisationsgrad (DP, durchschnittliche Zahl der Wiederholeinheiten in der Kette) eines durch schrittweises Wachstum aufgebauten Polymers hängt mit dem Umsatzgrad der Reaktion (p) folgendermaßen zusammen:

$$DP = \frac{1}{1-p}$$

Wenn ein hoher DP angestrebt wird, braucht man eine sehr effiziente Reaktion, z.B. p = 0.95, DP = 20 oder p=0.99, DP = 100.

Die sogenannte Suzuki-Reaktion (Synthetic Communications, 11(7), 513, (1981)) hat sich als eine geeignete Reaktion zur Herstellung Aryl-Aryl gekoppelter Verbindungen erwiesen. Hierbei handelt es sich um die Heterokupplung von einer Halogenid- bzw. Sulfonoxy-funktionellen aromatischen Verbindung mit einer Aryl-Bor Funktionalität enthaltenden Verbindung in Gegenwart einer Base, einer Palladiumverbindung und eines Lösungsmittels.

Es sind mehrere Variationen der Reaktionsparameter schon bekannt. Es ist in der Regel üblich die Reaktion zweiphasig durchzuführen; eine wäßrige Phase enthält den größten Teil einer Base und eine organische Phase enthält den größten Teil der Arylverbindungen. Es wird oft als organisches Lösungsmittel ein unpolares aromatisches Lösungsmittel verwendet, z.B. Benzol, Toluol, Xylole (z.B., Chem. Commun., 1598, (1997)). Es ist auch bekannt, die Reaktion in einem Gemisch aus einem aromatischen Lösungsmittel wie z.B. Benzol oder Toluol und einem Alkohol wie z.B. Methanol oder Ethanol (siehe z.B. J. Med. Chem., 40(4), 437, (1997)) durchzuführen. Diese wasser-mischbaren Lösungsmittel dienen als Reaktionsbeschleuniger, indem sie den Kontakt zwischen der Base und der aromatischen Borverbindung verbessern. Allerdings haben wir überraschend festgestellt, daß die Gegenwart solcher $\alpha$-H-funktionellen Alkohole zu unerwünschten Nebenprodukten und damit zu einer Verringerung der Reaktionseffizienz führt.

EP-A-0694530 lehrt, daß ein Prozeß basiert auf einer Kombination von wasserlöslichen Komplexliganden, einer in der organischen Phase löslichen Palladiumverbindung, und soviel Wasser, daß die Reaktionsmischung eine wäßrige Phase ausbildet, Vorteile besonders für elektrophile Gruppen enthaltende Arylverbindungen anbietet. Allerdings weist dieser Prozeß mehrere Mängel auf:

- Erstens stellen wasser-lösliche Liganden Probleme für hoch unpolare Substrate dar, denn die Konzentrationen von sowohl dem aktiven Katalysator (in Wasser löslicher Palladium-Phosphinkomplex) als auch den hoch unpolaren Edukten ist in der gleichen Phase nicht ausreichend hoch, um die Reaktionsgeschwindigkeit auf ein vernünftiges Niveau zu bringen. Dieses Problem mit der ' Reaktionsgeschwindigkeit führt dazu, daß Nebenreaktionen zu einem höheren Grad auftreten, und dadurch die Effizienz der Reaktion verringert wird.
- Zweitens führt der Prozeß in der Regel zu Ausbeuten nur in der Höhe von 90 bis 95%, die zwar für die Zwecke der Herstellung eines einfachen Moleküls (d.h. ein Molekül, das nur eine Aryl-Aryl gekoppelte Einheit aufweist) befriedigend sein könnte, allerdings für die Herstellung mehrfach gekoppelter Einzelmoleküle oder Polymere nicht ausreichend ist.

- Drittens wird das Verfahren mit relativ hohen Mol-Verhältnisse von Palladium (ca. 1 mol-%) durchgeführt, was zu hohen Kosten und zu einer aufwendigen Reinigung führt.
- Viertens wird normalerweise auch ein Überschuß an aromatischer Borverbindung eingesetzt, um die als Nebenreaktion auftretende Hydrolyse der Aryl-Bor Bindung auszugleichen. Dies ist von Nachteil zum einen wegen Materialverschwendung, aber auch besonders bei einer Polymerisation, weil hier ein Molverhälnis von exakt 1:1 benötigt wird, um hohe Molekulargewichte zu erreichen und dieses Molverhältnis durch die Hydrolyse beeinträchtigt wird.

In JP-A-2001/089404 wird ein Prozeß zur Herstellung von polycyclischen Aromaten beschrieben, wobei eine aromatische Borverbindung mit einer aromatischen Halogenverbindung in Anwesenheit von einer Carbonylverbindung gekoppelt wird. Da die Umsetzung in Anwesenheit einer Base durchgeführt wird, führt dies zu Problemen mit unerwünschten chemischen Reaktionen zwischen der Base und der Carbonylverbindung. Diese Nebenreaktionen stören nicht nur die Effizienz der Hauptreaktion sondern führen zur Bildung größerer Mengen an Verunreinigungen.

Bekannt sind auch Verfahren, bei denen ein Phasentransferreagenz eingesetzt wird, um den Kontakt zwischen der Base und der aromatischen Borverbindung zu verbessern:

1. US-A-5777070 (WO 99/20675) beschreibt ein Polymerisationsverfahren zur Umsetzung einer bifunktionellen aromatischen Borverbindung mit einem bifunktionellen Arylhalogenid in Gegenwart eines organischen Lösungsmittels, einer wäßrigen Lösung einer anorganischen Base und einer katalytischen Menge eines Palladiumkomplexes, wobei ein Phasentransferkatalysator (z.B. ein Tetraalkylammoniumsalz) in einem Mol-Verhältnis von mindestens 0.01 % (und bevorzugt weniger als 10 mol-%) bezogen auf die aromatische Borverbindung eingesetzt wird. Dieser Prozeß weist jedoch mehrere Probleme auf, die z. B. auch in WO 00/53656 kritisiert werden:

    - Erstens verläuft die Reaktion relativ langsam und das hergestellte Polymer weist Verfärbung auf.
    - Zweitens ist die Reaktion bezüglich des Molekulargewichts nicht reproduzierbar.
    - Drittens wird während der Reaktion Schaumbildung beobachtet und es kommt zur Ablagerung von Nebenprodukten an der Reaktorwand; dies führt zu einem Prozeß, der nur mit Schwierigkeit vergrößert werden kann.

2. Über einen verwandten Prozeß wird in WO 00/53656 berichtet. Hier wird als Base eine organische Verbindung (z.B. ein Tetraalkylammoniumhydroxid) eingesetzt, die effektiv die Konzentration der Base in der organischen Phase vergrößert; dies führt dazu, daß die Reaktion viel schneller verläuft. Wir haben aber festgestellt, daß dieses Verfahren mit Nachteilen behaftet ist:

    - Wenn die Reaktion nach dem beschriebenen Verfahren in einem unpolaren Lösungsmittel - wie Toluol - durchgeführt wird, fällt weißer Feststoff aus der Reaktionsmischung aus, welcher sich nur schwer wieder löst (nach 20 Stunden ist die Reaktionsmischung immer noch trüb). Es ist zu vermuten, daß dieser Feststoff ein Salz des Typs $R_4N^+[ArBR'_2(OH)]^-$ ist. Die Reaktion verläuft deswegen langsam und bleibt nach längerer Zeit immer noch heterogen, was dazu führt, daß keine Endläufigkeit erreicht wird. Dieses führt u. a. dazu, daß bei Polymeren kein wirklich hohes Molekulargewicht erreicht wird.
    - Zweitens führt die Reaktion unter unterschiedlichen Bedingungen zu unterschiedlichen Arten von Verfärbung; wird die Reaktion in Gegenwart eines unpolaren Lösungsmittels, wie Toluol, durchgeführt, so wird das Polymer leicht grau-schwarz verfärbt, wohingegen sich in Gegenwart eines polaren Lösungsmittels (z.B. THF oder Dioxan) das Polymer gelb verfärbt. Die grauschwarze Farbe ist auf Zersetzung des Palladiumkatalysators zurückzuführen, wobei Palladium sich kolloidal abscheidet. Die gelbe Farbe deutet auf Zersetzung der Base bzw. des daraus entstehenden Salzes hin. Diese Verunreinigungen sind besonders bei elektronischen Anwendungen (z.B. als organische Halbleiter in Leuchtdioden) unerwünscht, denn sie führen zu erheblicher Beeinträchtigung der Qualität.
    - Des weiteren hat die Verwendung dieser Basen weitere Nachteile:

        - Die beschriebenen Basen (und die daraus entstehenden Boratsalze) sind aufgrund ihrer Natur Phasenübergangskatalysatoren und lassen sich daher nur mit größerem Aufwand vom Produkt abtrennen. Dies führt dazu, daß die Aufarbeitung länger und dadurch teurer wird, und eventuell nicht entfernte Reste in der Anwendung stören können.
        - Außerdem sind derartige organische Basen in der Regel einen Faktor 5 bis 10 teurer als die sonst verwendeten Mineralbasen (wie z. B. Carbonate oder Phosphate der Alkalimetalle).
        - Weiterhin führt diese Art Basen in manchen Fällen auch zur Schaumbildung.

    - Viertens wird relativ viel Katalysator (ca. 0.15 mol-% bezogen auf die Menge an Aryl-halogen-Gruppen) gebraucht, was im Rohpolymer zu Palladium-Konzentrationen im Bereich von 100 bis 1000 ppm führt, was wiederum zur oben schon mehrfach diskutierten Problematik bzgl. Aufreinigung bzw. Restverunreinigung führt.

Aus dieser Kritik am Stand der Technik ist es klar, daß es immer noch Bedarf an hoch-effizienten Verfahren gibt, die bei geringer Katalysator-Konzentration zu Aryl-Aryl gekoppelten Verbindungen, mit möglichst wenigen Fehlreaktionen führen. Wir haben nun überraschend festgestellt, daß durch Verwendung von bestimmten Lösungsmittelgemischen in Gegenwart von sehr niedrigen Konzentrationen von Palladiumverbindungen, die kein Triphenylphosphin enthalten, die Suzuki-Reaktion bei besonders hoher Reaktionseffizienz verläuft.

Gegenstand der Erfindung ist somit ein Verfahren zur Umsetzung einer Halogen-oder Sulfonyloxy-funktionellen Aryl- oder Heteroarylverbindung mit einer aromatischen oder heteroaromatischen Borverbindung in Gegenwart einer katalytischen Menge einer Palladiumverbindung, einer Base und eines Lösungsmittelgemisches, unter Bildung einer Aryl-Aryl- bzw. Aryl-Heteroaryl- oder Heteroaryl-Heteroaryl-C-C-Bindung, dadurch gekennzeichnet,

a. daß das Lösemittelgemisch jeweils mindestens 0.1Vol% einer Verbindung der folgenden Gruppen

i) mit Wasser mischbare organische Lösungsmittel
ii) mit Wasser unmischbare organische Lösungsmittel
iii) Wasser

enthält, mit der Maßgabe, daß sowohl Alkohole als auch Carbonylverbindungen, die $\alpha$-Wasserstoff Atome enthalten, ausgeschlossen sind;
b. daß die Palladiumverbindung kein Triphenylphosphin enthält bzw. der Reaktionsmischung dieses nicht gezielt zugesetzt wird.

Die erfindungsgemäße Reaktion kann nun (je nach genauer Zusammensetzung und Temperatur) entweder ein- oder auch mehrphasig ablaufen, bzw. dies auch während der Reaktionsdurchführung ändern. Bevorzugt läuft die erfindungsgemäße Reaktion jedoch mehrphasig ab.

Aryl- bzw. Heteroarylverbindungen bzw. die aromatischen oder heteroaromatischen Reste der entsprechenden Borverbindungen, sind Aromaten bzw. Heteroaromaten mit 2 bis 40 C-Atomen, welche mit einem oder auch mehreren linearen, verzweigten oder cyclischen Alkyl- bzw. Alkoxyresten mit 1 bis 20 C-Atomen, bei denen wiederum eine oder mehrere $CH_2$-Gruppen, die nicht aufeinander folgen, durch O, S, C=O, oder eine Carboxygruppe ersetzt sein können, substituierten oder unsubstituierten C-2 bis C-20 Aryl- oder Heteroarylresten, Fluor, Cyano, Nitro, Sulfonsäurederivaten substituiert sein können bzw. auch unsubstituiert sein können.

Einfache Verbindungen, die bevorzugt verwendet werden können, sind die entsprechenden substituierten oder unsubstituierten Derivate von Benzol, Naphthalin, Anthracen, Pyren, Biphenyl, Fluoren, Spiro-9,9'-bifluoren, Phenanthren, Triptycen, Pyridin, Furan, Thiophen, Benzothiadiazol, Pyrrol, Chinolin, Chinoxalin, Pyrimidin und Pyrazin. Weiterhin sind ausdrücklich entsprechende (im Sinne des obigen Textes) multifunktionelle Verbindungen mit umfaßt, ebenso die bei einer Polymerisation auftretenden Oligomeren mit funktionellen Aryl- bzw. Heteroaryl-Enden.

Die Ausgangsverbindungen für das erfindungsgemäße Verfahren sind zum einen Halogen- oder Sulfonyloxy-funktionalisierte Aryl- oder Heteroarylverbindungen der Formel (I),

$$Ar\text{-}(X)_n \qquad (I)$$

worin Ar ein Aryl- bzw. Heteroarylrest wie oben definiert ist, X -Cl, -Br, -1, $-OS(O)_2R^1$ bedeutet, und $R^1$ ein Alkyl-, Aryl- oder fluorierte Alkylrest ist und n mindestens 1, bevorzugt 1 bis 20, besonders bevorzugt 1, 2, 3, 4, 5 oder 6 bedeutet.

Die zweite Klasse Ausgangsverbindungen für das erfindungsgemäße Verfahren sind aromatische bzw. heteroaromatische Borverbindungen der allgemeinen Formel (II)

$$Ar\text{-}(BQ_1Q_2)_m \qquad (II)$$

worin Ar ein Aryl- bzw. Heteroarylrest wie oben definiert ist, $Q_1$ und $Q_2$ gleich oder verschieden bei jedem Auftreten -OH, $C_1$-$C_4$-Alkoxy, $C_1$-$C_4$-Aryloxy, $C_1$-$C_4$-Alkyl, oder Halogen bedeuten, oder $Q_1$ und $Q_2$ zusammen eine C1-C4-Alkylendioxy-Gruppe, die gegebenenfalls durch ein oder mehrere C1-C4-Alkylgruppen substituiert sein kann, bilden, oder $Q_1$ und $Q_2$ und das Boratom zusammen Teil eines Boroxinrings der Formel (III), bzw. ähnlicher Boronsäureanhydride bzw. Teilanhydride, sind,

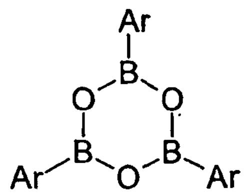

(III)

und m mindestens 1, bevorzugt 1 bis 20, besonders bevorzugt 1, 2, 3, 4, 5 oder 6 bedeutet.

Für die Darstellung linearer Polymere wird nun bevorzugt für n und m gleichzeitig der Wert 2 gewählt.

Die Palladiumverbindung besteht aus einer Palladiumquelle und eventuell einer oder mehrerer zusätzlicher Komponenten.

Die Palladiumquelle kann entweder eine Palladiumverbindung oder metallisch sein. Geeignete Palladiumquellen sind Salze des Palladium(II)s oder Palladium(O)verbindungen bzw. Komplexe. Bevorzugte Palladiumquellen sind Palladium (II)halogenide, Palladium(II)carboxylate, Palladium(II)β-diketonaten, Tris(dibenzylidenaceton)dipalladium(O) ($Pd_2dba_3$), Dichlor(bisbenzonitril)palladium(II), Dichlor(1,5-cyclooctadien)palladium(II), Tetrakis(triarylphosphino)palladium(O) oder auch diskrete Verbindungen von Palladium mit den folgenden beschriebenen zusätzlichen Komponenten.

Zusätzliche Komponenten, die zur Bildung der aktiven Palladiumverbindung verwendet werden können, sind im breitesten Sinne Liganden, die an dem Palladiummetallzentrum koordinieren können.

Bevorzugte Varianten sind Phosphin-Liganden aus der Gruppe der Tri-Aryl-Phosphine, Di-Aryl-Alkyl-Phosphine, Aryl-Dialkyl-Phosphine, Trialkyl-Phosphine, Tri-Heteroaryl-Phosphine, Di-Heteroaryl-Alkyl-Phosphine, Heteroaryl-Dialkyl-Phosphine, wobei die Substituenten am Phosphor gleich oder verschieden, chiral oder achiral sein können wobei ein oder mehrere der Substituenten die Phosphorgruppen mehrerer Phosphine verknüpfen können und wobei ein Teil dieser Verknüpfungen auch ein oder mehrere Metallatome sein können, mit der Ausnahme von Triphenylphosphin.

Des weiteren können noch Halogen-Phosphine, Dihalogen-Phosphine, Alkoxy- bzw. Aryloxy-Phosphine, Dialkoxy- bzw. Diaryloxy-Phosphine verwendet werden.

Ganz besonders bevorzugt sind u. a. substituierte Triphenylphosphine, gemäß Formel (IV),

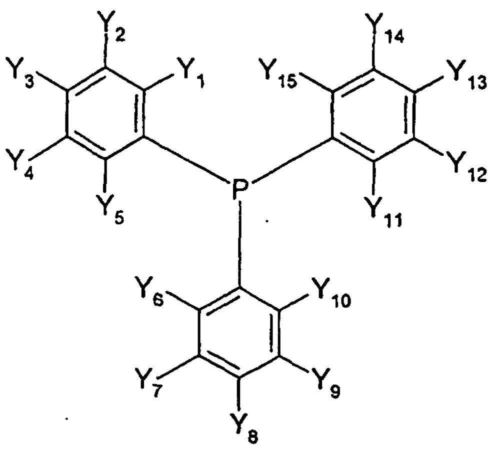

(IV)

wobei gilt,

$Y_1$ bis $Y_{15}$ sind gleich oder verschieden Wasserstoff, Alkyl-, Aryl-, Alkoxy-, Dialkylamino-, Chlor-, Fluor-, Sulfonsäure-; Cyano-, Nitroreste, mit der Maßgabe, daß mindestens 1, bevorzugt aber 3 oder mehr der Substituenten $Y_1$ bis $Y_{15}$ ungleich Wasserstoff sind.

Beispiele der ganz besonders bevorzugten Varianten sind Tris(o- oder m- oder p-tolyl)phosphin, Tris(o- oder m- oder p-anisyl)phosphin, Tris(o- oder m- oder p-fluorphenyl)phosphin, Tris(o- oder m- oder p-chlorphenyl)phosphin, Tris(2,6-dimethylphenyl)phosphin, Tris(2,6-dimethoxyphenyl)phosphin, Tris(mesityl)phosphin, Tris(2,4,6-trimethoxyphenyl) phosphin, Tris(pentafluorphenyl)phosphin.

Weitere bevorzugte Liganden sind *Tert*-butyl-di-*o*-tolylphosphin, Di-*tert*-butyl-*o*-tolylphosphin, Dicyclohexyl-2-biphenylphosphin, Di-*tert*-butyl-2-biphenylphosphin, Triethylphosphin, Tri-iso-propyl-phosphin, Tri-cyclohexylphosphin, Tri-*tert*-butylphosphin, Tri-*tert*-pentylphosphin, Bis(di-*tert*-butylphosphino)methan, 1,1'-Bis(di-*tert*-butylphosphino)ferrocen.

Triphenylphosphin ist nun aus dieser Erfindung ausgeschlossen, weil überraschend festgestellt wurde, daß dieses zu einem besonders hohen Niveau von Fehlreaktionen führt. Die Verwendung der anderen wie oben beschriebenen erfindungsgemäßen Liganden vermeidet diese Nachteile.

Die Palladiumverbindung kann entweder als Feststoff (d.h. heterogen) oder gelöst vorliegen, im letzteren Fall entweder in der organischen oder in der wäßrigen Phase gelöst.

Bei dem erfindungsgemäßen Verfahren wird die Palladiumverbindung in der Regel in einer Menge von 0.00001 mol% bis 5 mol% (Palladium) bezogen auf die Menge zu schließender C-C-Verknüpfungen eingesetzt. Bevorzugt ist hier der Bereich von 0.001 % bis 2%, besonders bevorzugt der Bereich von 0.001 % bis 1 %.

Die zusätzliche Komponente (Ligand) wird in der Regel im Bereich von 10:1 bis 1:2, bevorzugt im Bereich von 8:1 bis 1:1, bezogen auf den Gehalt an Palladium zugesetzt.

Die Basen werden z. B. analog der o. g. Anmeldung US-A-5,777,070 verwendet. Es werden z. B. Alkali- und Erdalkalimetallhydroxide, -carboxylate, -carbonate, -fluoride und -phosphate wie Natrium- und Kaliumhydroxid, -acetat, -carbonat, -fluorid und - phosphat oder auch Metall-Alkoholate verwendet, bevorzugt entsprechende Phosphate bzw. Carbonate. Gegebenenfalls können Mischungen der Basen verwendet werden.

Im Sinne dieser Anmeldung bedeutet "Wasser mischbares organisches Lösungsmittel", ein Lösungsmittel, welches sowohl beim Vorliegen von mindestens 5 Gewichts-% Wasser im Lösungsmittel, als auch beim Vorliegen von mindestens 5 Gewichts-% Lösungsmittel in Wasser bei Raumtemperatur eine klare einphasige Lösung bildet.

Bevorzugte Lösungsmittel dieses Typs sind organische Ether, Ester, Nitrile, tertiäre Alkohole, Sulfoxide, Amide und Carbonate, besonders bevorzugt Ether und ganz besonders bevorzugt Dioxan, Tetrahydrofuran, Ethylenglycolether, DME und verschiedene Polyethylenglycolether.

Bevorzugt werden im erfindungsgemäßen Verfahren ein oder mehrere Lösemittel, ausgewählt aus dieser Klasse in einem Bereich (bezogen auf das Volumen des Gesamtreaktionsgemisches) von 1 bis 90%, besonders bevorzugt in einem Bereich von 10 bis 75%, ganz besonders bevorzugt in einem Bereich von 25 bis 75% verwendet.

Im Sinne dieser Anmeldung bedeutet "Wasser unmischbares organisches Lösungsmittel", ein Lösungsmittel, welches bereits beim Vorliegen von weniger als 5 Gewichts-% Wasser im Lösungsmittel, oder bereits beim Vorliegen von weniger als 5 Gewichts-% Lösungsmittel in Wasser bei Raumtemperatur keine klare einphasige Lösung mehr bildet, d. h. hier bereits eine Phasentrennung zu erkennen ist.

Bevorzugte mit Wasser nicht mischbare Lösungsmittel sind aromatische und aliphatische Kohlenwasserstoffe, unpolare Ether, chlorhaltige Kohlenwasserstoffe, bevorzugt aromatische Kohlenwasserstoffe, ganz besonders bevorzugt Toluol, Xylole oder Anisol.

Bevorzugt werden im erfindungsgemäßen Verfahren ein oder mehrere Lösemittel ausgewählt aus dieser Klasse in einem Bereich (bezogen auf das Volumen des Gesamtreaktionsgemisches) von 1 bis 70%, besonders bevorzugt in einem Bereich von 10 bis 50%, ganz besonders bevorzugt in einem Bereich von 15 bis 50% verwendet.

Wasser wird in der Regel in normaler Qualität, d. h. Leitungswasser, eventuell entionisiert, verwendet. Für besondere Anforderungen können hier natürlich auch besser gereinigte bzw. entsalzte Qualitäten eingesetzt werden.

Bevorzugt wird im erfindungsgemäßen Verfahren Wasser in einem Bereich (bezogen auf das Volumen des Gesamtreaktionsgemisches) von 1 bis 50%, besonders bevorzugt in einem Bereich von 5 bis 35% verwendet.

Das erfindungsgemäße Verfahren ist in der Regel schwach exotherm, benötigt allerdings meist eine leichte Aktivierung. Häufig wird das Verfahren deshalb bei Temperaturen oberhalb von Raumtemperatur durchgeführt. Ein bevorzugter Temperaturbereich ist deshalb der Bereich zwischen Raumtemperatur und dem Siedepunkt der Reaktionsmischung, besonders bevorzugt der Temperaturbereich zwischen 40 und 120°C, ganz besonders bevorzugt der Bereich zwischen 40 und 100°C. Es kann aber auch sein, daß die Reaktion schon bei Raumtemperatur genügend schnell verläuft, so daß keine aktive Erwärmung benötigt wird.

Die Reaktion erfolgt unter Rühren, wobei je nach Viskosität der Reaktionsmischung einfache Rührer oder Hochviskositätsrührer angewandt werden können. Bei hohen Viskositäten können auch Stromstörer verwendet werden.

Die Konzentration der Reaktionskomponenten hängt nun sehr stark von der jeweiligen Reaktion ab. Während man Polymerisationen häufig (wegen der dabei auftretenden Viskositätserhöhung) bei Konzentrationen im Bereich von weniger als 1 mol/l (bezogen auf zu schließende C-C-Bindungen) durchführt, kann dies bei der Synthese von definierten Einzelmolekülen auch in einem höheren Konzentrationsbereich geschehen.

Die Reaktionszeit ist prinzipiell frei wählbar und wird sich an der jeweiligen Reaktionsgeschwindigkeit orientieren. Ein technisch sinnvoller Rahmen ist sicherlich im Bereich von wenigen Minuten bis zu 100 Stunden, bevorzugt im Bereich von 15 Minuten bis 24 Stunden zu sehen.

Die Reaktion an sich läuft unter Normaldruck ab. Technisch kann es aber auch durchaus sinnvoll sein unter erhöhtem oder erniedrigtem Druck zu arbeiten. Dies hängt nun sehr stark von der Einzelreaktion und vor allem vom zur Verfügung stehenden Equipment ab.

Die Vorteile des beschriebenen erfindungsgemäßen Verfahrens sind u. a. die folgenden:

- Herausragende Effizienz (Umsatzgrad), wodurch Materialien entstehen, die sehr wenige Fehlstellen enthalten.

Besonders bei multifunktionellen Verbindungen, ist das erfindungesgemäße Verfahren von Vorteil, denn der Effizienzeffekt ist dann potenziert. Ganz besonders bei Polymerisationen, wobei die Edukte in der Regel zwei zu reagierende Gruppen enthalten und die Aryl-Aryl-Kopplung mehrmals hintereinander zu einem kettenförmigen Molekül stattfindet, führt das erfindungsgemäße Verfahren zu außergewöhnlich hohen Kettenlängen und Molekulargewichten.

- Ein besondere Vorteil der vorliegenden Erfindung ist, daß wegen der verbesserten Effizienz der Suzuki-Reaktion, die eingesetzte Menge an teuerem Palladium-Katalysator verringert werden kann. Dies hat zur Folge, daß die Herstellungskosten reduziert werden, und zusätzlich die Restmengen Palladiums im Produkt drastisch verringert wird. Dies bringt technische Vorteile, z.B. Vermeidung von Beeinträchtigung der Farbe des Produkts, aber besonders bei organischen Halbleitern ist die Verringerung von solchen Verunreinigungen vorteilhaft, denn die Anwesenheit von Metallresten führt zu Beeinträchtigungen in der Anwendung.
- Die weiteren Nachteile, wie sie oben für die Anmeldungen WO 00/53656 und US-A-5777070 (WO 99/20675) beschrieben wurden, sind entweder gänzlich überwunden (z. B. teuere Basen bzw. Phasentransferkatalysatoren) oder zumindest deutlich abgemildert (Schaumbildung).

Da das erfindungsgemäße Verfahren - w. o. beschrieben - eine sehr hohe Effizienz aufweist, ist eine bevorzugte Ausführung die Umsetzung von multifunktionellen Molekülen, entweder zu definierten Einzelmolekülen oder zu Polymeren. Multifunktionell im Sinne dieser Anmeldung soll bedeuten, daß eine Verbindung mehrere (z. B. zwei, drei, vier, fünf, usw.) gleiche oder gleichartige funktionelle Einheiten enthält, die in der entsprechenden Umsetzung (hier Suzuki-Reaktion) alle in der gleichen Weise zu einem Produktmolekül reagieren. Multifunktionell soll auch Moleküle mit einbeziehen, die mehrere miteinander reagierende funktionelle Gruppen enthalten (z.B. ein Molekül, das sowohl mindestens eine aromatische Halogengruppe, als auch mindestens eine aromatische Borgruppe enthält; ein sogenanntes AB-Monomer). Mit der Umsetzung von multifunktionellen Verbindungen ist hier zunächst die Umsetzung einer multifunktionellen Verbindung mit mehreren monofunktionellen Verbindungen zu einer definierten "niedermolekularen" Verbindung gemeint. Werden hingegen (mindestens) zwei verschiedene multifunktionelle Verbindungen miteinander in Reaktion gebracht, wird das Produkt polymeren Charakter aufweisen. Auch dies stellt ausdrücklich eine Suzuki-Reaktion im Sinne dieser Erfindung dar.
Wie aus diesem Zusammenhang erkennbar, bezeichnet "niedermolekular" im Rahmen der vorliegenden Erfindung Moleküle mit einer definierten molaren Masse, die immer $<10000$ g/mol, bevorzugt auch $<2000$ g/mol liegen wird.
Polymerer Charakter liegt gemäß der vorliegenden Erfindung dann vor, wenn beim Hinzufügen bzw. Weglassen einer einzelnen Wiederholeinheit, sich die maßgeblichen Eigenschaften (z. B. Löslichkeit, Schmelzpunkt, Glastemperatur, etc.) nicht oder nur unwesentlich ändern. Eine einfachere Definition (vor allem im Gegensatz zu den Angaben bzgl. "niedermolekular") ist die Angabe des Molekulargewichts, wonach dann "polymerer Charakter" bei einem Molekulargewicht von $>10000$ g/mol zu definieren ist.
Wie oben beschrieben ist eine bevorzugte Ausführungsform des erfindungsgemäßen Verfahrens dessen Verwendung zur Verknüpfung einer multifunktionellen Verbindung mit mehreren monofunktionellen Verbindungen.
Die dadurch erzeugten Verbindungen zeichnen sich durch die Abwesenheit (bzw. den sehr geringen Anteil) von - durch die Reaktion erzeugten - strukturellen Defekten aus.
Diese Verbindungen, erzeugt durch das erfindungsgemäße Verfahren, weisen damit deutliche Verbesserungen gegenüber dem Stand der Technik auf und sind somit ebenfalls Gegenstand der Erfindung.
Wie oben beschrieben ist eine weitere bevorzugte Ausführungsform des erfindungsgemäßen Verfahrens dessen Verwendung während einer Polymerisation. Die dadurch erzeugten Polyarylene (dieser Begriff soll hier auch Copolymere, welche nicht Arylen- bzw. Heteroarylen-Einheiten in der Hauptkette enthalten, umfassen) zeichnen sich durch hohes (aber auch gut einstellbares) Molekulargewicht und die Abwesenheit (bzw. den sehr geringen Anteil) von - durch die Polymerisation erzeugten - strukturellen Defekten aus.
Diese Polymere, erzeugt durch das erfindungsgemäße Verfahren, weisen damit deutliche Verbesserungen gegenüber dem Stand der Technik auf und sind somit ebenfalls Gegenstand der Erfindung.
Dieses Verfahren ermöglicht die Herstellung von Poly-arylenen bzw. -heteroarylenen mit höheren Molekulargewichten als bisher bekannt. Der höchste bisher veröffentlichte Gewichtsmittel-Polymerisationsgrad (durch GPC gemessene $M_w$ geteilt durch das durchschnittliche Molekulargewicht der Wiederho(ungseinheit(en)) beträgt ca. 950 und das efindungsgemäßes Verfahren liefert Polymere mit teilweise deutlich höheren Werten (siehe Beispiel 5). Daher sind Poly-arylene bzw. - heteroarylene mit einem Gewichtsmittel-Polymerisationsgrad $DP_W$ von über 1000 ebenfalls Gegenstand dieser Erfindung.
Ein bevorzugtes erfindungsgemäßes Polymerisationsverfahren ist wie folgt zu beschreiben:

- Als Wasser mischbares organisches Lösungsmittel" wird Dioxan bzw. THF im Bereich von 25 bis 75% (bezogen auf das Gesamtlösungsvolumen) verwendet.
- Als "Wasser unmischbares organisches Lösungsmittel" wird ein Aromat, beispielsweise Toluol, ein Xylol, Chlorbenzol, oder Anisol, bevorzugt Toluol oder ein Xylol im Bereich von 15 bis 50% verwendet.

● Wasser wird im Bereich von ca. 5 bis 50% zugesetzt.

● Die Monomere werden im Konzentrationsbereich von 20 bis 200 mmoi/i verwendet. Es werden entweder von Beginn an die beiden verschiedenen Funktionalitäten (Halogenid bzw. Sulfonyloxy gegenüber Bor-gruppen) im Verhältnis 1 : 1 (möglichst genau) vorgelegt, oder dieses Verhältnis im Laufe der Reaktion durch fortlaufende (entweder kontinuierliche oder chargenweise) Zugabe einer der beiden Funktionalitäten zu einem Überschuß der anderen Funktionalität erreicht.

● Gegebenenfalls werden geringe Mengen monofunktioneller Verbindungen ("Endcapper") oder tri- oder multifunktioneller Gruppen ("Verzweiger") zugesetzt.

● Die Palladium-Verbindung wird im Verhältnis 1:10000 bis 1:50, bevorzugt 1:5000 bis 1:100 bezogen auf die Anzahl der zu schließenden Bindungen zugegeben. Hier ist beispielsweise bevorzugt die Verwendung von Palladium-(11)-salzen, wie $PdAc_2$ oder $Pd_2dba_3$ und die Addition von Liganden wie $P(o\text{-}Tol)_3$, und diese im Verhältnis von 1:1 bis 1:10, bezogen auf Pd.

● Als Base findet z. B. $K_3PO_4$ eine bevorzugte Verwendung. Diese wird bevorzugt im Verhältnis von 0.8:1 bis 5:1 bezogen auf die Anzahl der zu schließenden Bindungen zugegeben.

● Die Reaktion wird unter heftigem Rühren am Rückfluß gehalten und innerhalb eines Zeitraums von ca. 1 bis 24 Stunden durchgeführt.

● Es hat sich als sinnvoll herausgestellt, am Ende der Reaktion ein sogenanntes End-Capping durchzuführen, d. h. monofunktionelle Verbindungen zuzugeben, die eventuelle reaktive Endgruppen in den Polymeren abfangen.

● Am Ende der Reaktion kann nun das Polymer durch gängige Reinigungsverfahren, wie z. B. Ausfällen, Umfällen, Extraktion u. ä. weiter aufgereinigt werden. Für die Verwendung in hochwertigen Anwendungen (z. B. Polymere Leuchtdioden) muß i. d. R. die Verunreinigung mit organischen (z. B. Oligomeren) und anorganischen Substanzen (z. B. Pd-Reste, Basen-Reste) auf ein möglichst geringes Maß gebracht werden. Dies kann für

- Pd auf verschiedenste Art und Weise erreicht werden, z. B. durch lonen-Austauscher, flüssig-flüssig-Extraktion, Extraktion mit Komplexbildnern und anderen Verfahren,
- für die Entfernung von niedermolekularen Anteilen z. B. durch fest-flüssig-oder flüssig-flüssig-Extraktion oder auch mehrfaches Umfällen geschehen,
- für die Entfernung von weiterer anorganischer Verunreinigung z. B. durch die bereits für Pd und die niedermolekularen Anteile beschriebenen Verfahren, aber auch durch Extraktion mit beispielsweise anorganischen Mineralsäuren geschehen.

Eine weitere mögliche Ausführung der oben beschriebenen Polymerisation ist deren Durchführung in mindestens zwei Stufen, wobei in der ersten Stufe ein Überschuß an einem der Monomeren eingesetzt wird, so daß ein kurzkettiges Polymer mit einer ersten Zusammensetzung gebildet wird. Kurzkettig meint hier, daß zunächst nur ein Oligomer, welches wenige (z. B. zwischen 3 und 20) Wiederholeinheiten besitzt, gebildet wird. Darauf folgend wird in einer oder mehrerer weiteren Stufe(n) die restlichen Monomere zugegeben, so daß schließlich das Verhältnis der Borhaltigen reaktiven Gruppen und Halogen- bzw. Sulfonyloxy-haltigen reaktiven Gruppen 1:1 beträgt.
Bevorzugt ist die Monomerzusammensetzung der zweiten bzw. weiterer Stufen unterschiedlich zu derjenigen der ersten Stufe, wodurch Polymere entstehen, die eine blockartige Struktur aufweisen.
Blockartige Struktur bedeutet hier das folgende: durch die erste Stufe entsteht beispielsweise ein Oligomer mit der Abfolge $B(AB)_n$, wobei A und B für die beiden verwendeten Monomereinheiten steht, B das Monomer darstellt, daß im Überschuß eingesetzt wird und n die mittlere Länge dieser Oligomere darstellt. Daraufhin wird dann beispielsweise ein Monomer C so zugegeben, daß die Gesamtzahl der reaktiven Endgruppen ausgeglichen ist. Dies führt schließlich zu einem Polymer, welches hauptsächlich folgende Sequenzen hat: $(C[B(AB)_n])_m$, wobei m die mittlere Kettenlänge des so definierten Polymers ist. D. h. es wechseln sich Blöcke mit der Struktur $B(AB)_n$ mit C ab, das Polymer hat eine blockartige Struktur. Durch das beschriebene Verfahren sind natürlich auch weitere blockartige Strukturen darstellbar, je nach Abfolge der Monomerzugabe.

Das erfindungsgemäße Verfahren ermöglicht die Herstellung hochmolekularer Polymere dieser blockartigen Form, weil es im Gegensatz zu den bisher bekannten Prozessen besonders schonend auf die Bor-, Halogen- bzw. Sulfonyloxy-haltigen reaktiven Gruppen in der Abwesenheit der entsprechenden Gegengruppen wirkt.
Mit dem hier beschriebenen Verfahren können nun beispielsweise Polyarylene, wie diese in EP-A-842.208, WO 00/22026, WO 00/46321, WO 99/54385, WO 00/55927, WO 97/31048, WO 97/39045, WO 92/18552, WO 95/07955, EP-A-690.086, WO 02/044060 und der noch nicht offengelegten Anmeldeschrift DE 10143353.0 beschrieben werden, hergestellt werden. Häufig weisen die Polymere, hergestellt durch das erfindungsgemäße Verfahren, Vorteile gegenüber den Angaben in dieser zitierten Literatur auf, so zum Beispiel bezüglich der Defektfreiheit, des Molekulargewichts, der Molekulargewichtsverteilung und damit häufig auch bezüglich der entsprechenden Anwendungseigenschaften.

Die erfindungsgemäßen Polymere können in elektronischen Bauteilen, wie organische Leuchtdioden (OLEDs),

organischen integrierten Schaltungen (O-ICs), organischen Feld-Effekt-Transistoren (OFETs), organischen Dünnfilmtransistoren (OTFTs), organischen Solarzellen (O-SCs), organischen Laserdioden (O-Laser), organischen Farbfilter für Liquid-Crystal-Displays oder organischen Photorezeptoren, Verwendung finden. Diese sind ebenfalls Bestandteil der vorliegenden Erfindung.

Die beschriebene Erfindung wird durch die Beschreibung und die nachfolgend aufgeführten Beispiele erläutert, ist aber keinesfalls auf diese beschränkt, sondern kann durch den Fachmann natürlich einfach auf die oben aufgezeigten bzw. in der zitierten Literatur beschriebenen Systeme übertragen werden.

Teil A. Beispiele des erfindungsgemäßen Verfahrens

A1: Herstellung von multifunktionellen Verbindungen

Herstellung von 2,2',7,7'-Tetrakis(biphenyl-4-yl)-9,9'-spirobifluoren Durchführung: 2,2',7,7'-Tetrabrom-9,9'-spirobifluoren (158.0 g, 250 mmol), Biphenyl-4-boronsäure (239.0 g, 1200 mmol) und Kaliumphosphat (447 g, 2100 mmol) wurden in einem Gemisch aus 700 mL Toluol, 700 mL Dioxan und 1000 mL Wasser suspendiert und es wurde 30 Minuten Argon durch die Lösung geleitet. Anschließend wurde Tris-o-tolylphosphin (0.459 g, 1.5 mmol) und 5 min. später 58 mg (0.25 mmol) Palladiumacetat zugegeben und die Reaktionsmischung auf 87°C erhitzt. Nach 8 Stunden wurde das Gemisch auf Raumtemperatur abgekühlt und der ausgefallene Feststoff abfiltriert und mit Wasser und anschließend Toluol nachgewaschen. Es ergab sich dabei 222 g (96% der Theorie) des gewünschten Produkts, welches laut HPLC ohne weitere Aufreinigung eine Reinheit von 99.6% aufwies.
$^1$H NMR ($CDCl_3$): 7.98 (d, 4 H, H-4), 7.72 (dd, 4 H, H-3), 7.54 (m, 24 H, Phenyl-H), 7.40 (m, 8 H, Phenyl-H), 7.31 (m, 4 H, Phenyl-H), 7.10 (d, 4 H, H-1).

A2: Herstellung von Polymeren

Die Synthese der in dieser Anmeldung verwendeten Monomeren wurden in der Anmeldeschrift WO 02/07706'0 beschrieben. Die verwendeten Monomere sind im folgenden wiedergegeben:

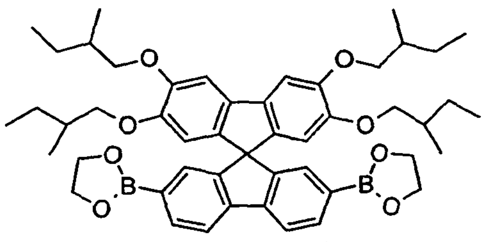

M1

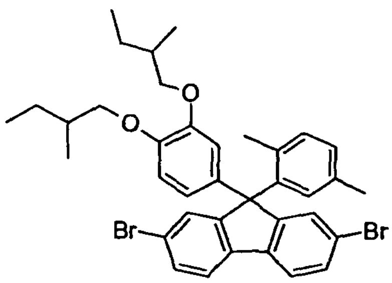

M2

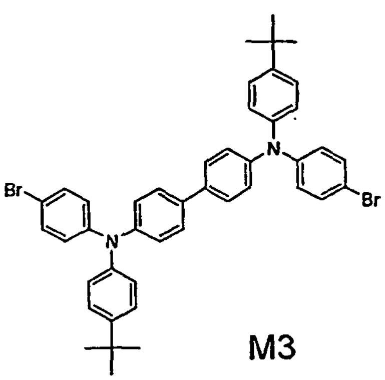

M3

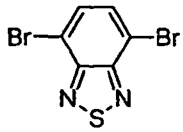

M4

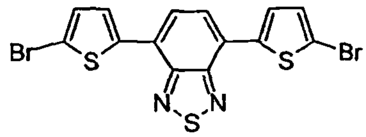

M5

*Beispiel P1: Verwendung von Dioxan/Toluol Gemisch mit 0. 025 mol% Pd. Copolymerisation von 50 mol% 2', 3', 6', 7'-Tetra(2-methylbutyloxy)spirobifluoren-2,7-bisboronsäureethylenglycolester(M9), 50 mol% 2,7-Dibrom-9-(2',5'-dimethyl phenyl)-9-[3", 4 "-bis(2-methyl-butyloxy)phenyl]fluoren (M2) (**Polymer P1**).*

3.3827 g (5.00 mmol) **M2** (99.85%ig), 4.0033 g (5.00 mmol) **M1** (99.4%ig), 4.89 g (21.25 mmol) $K_3PO_4 \cdot H_2O$, 15.6 mL Toluol, 46.9 mL Dioxan, und 8.5 mL Wasser wurden 30 min durch Durchleiten von Argon entgast. Anschließend wurde 4.56 mg (15 μmol) Tris-o-tolylphosphin und 5 Minuten später 0.56 mg (2.5 μmol) Palladiumacetat unter Schutzgas zugegeben. Die Suspension wurde unter Argon-Überlagerung bei 87°C Innentemperatur (leichter Rückfluß) kräftig gerührt. Nach 2 Stunden wurden weitere 15.6 mL Toluol und 46.9 mL Dioxan auf Grund der hohen Viskosität zugegeben. Nach 6 Stunden wurden weitere 0.30 g **M1** zugesetzt. Nach weiteren 1 h Erhitzen wurden 0.3 mL Brombenzol zugesetzt und noch 1 h zum Rückfluß erhitzt.
Die Reaktionslösung wurde mit 200 mL Toluol verdünnt, die Lösung wurde mit 100 mL 1 %iger wäßriger NaCN 3h ausgerührt. Die organische Phase wurde 3x mit $H_2O$ gewaschen und durch Zusetzen in 500 mL Methanol gefällt. Das Polymer wurde in 600 mL THF 1h bei 50°C gelöst, mit 1200 mL MeOH ausgefällt, gewaschen und im Vakuum getrocknet. In 600 mL THF/ 1200 mL Methanol wurde ein weiteres Mal umgefällt, abgesaugt und bis zur Massenkonstanz getrocknet. Man erhielt 5.16 g (8.78 mmol, 87.8 %) des Polymeren **P1** als farblosen Feststoff.
$^1H$ NMR ($C_2D_2Cl_4$): 7.8-7.1 (m, 9 H, Fluoren, Spiro); 6.6 (br. s, 1 H, Fluoren), 6.21 (br s, 1 H, Spiro); 4.0-3.4 (3 x m, 6 H, $OCH_2$), 2.16 (s, 1.5 H, $CH_3$); 1.9-0.7 (m, Alkyl H). GPC: THF; 1 mL/min, PLgel 10μm Mixed-B 2 x 300 x 7.5 $mm^2$, 35°C, RI Detektion:
Mw = 814000 g/mol, Mn = 267000 g/mol.

*Beispiel P2: Verwendung von Dioxan/Toluol Gemisch mit 0. 0125 mol% Pd. Copolymerisation von 50 mol% 2', 3', 6', 7 -Tetra(2-methylbutyloxy)spirobifluoren-2, 7-bisboronsäureethylenglycolester (M1), 40 mol% 2, 7-Dibrom-9-(2', 5'-dimethyl-phenylj-9-[3",4"-bis(2-methyl-butyloxy)phenyl]fluoren (M2) und 10 mol% N,N'-Bis(4-bromophenyl)-N,N'-bis (4-tert-butylphenyl)benzidin (M3) (**Polymer P2**).*

13.5308 g (20.00 mmol) **M2** (99.85%ig), 20.0164 g (25 mmol) **M1** (99.4%ig), 3.7932 g (5.00 mmol) **M3** (99.5%ig), 24.47 g (106.25 mmol) $K_3PO_4 \cdot H_2O$, 78 mL Toluol, 234 mL Dioxan, und 44 mL Wasser wurden 30 min durch Durchleiten von Argon entgast. Anschließend wurde 11.4 mg (37 μmol) Tris-o-tolylphosphin und 5 Minuten später 1.40 mg (6.25 μmol) Palladiumacetat unter Schutzgas zugegeben. Die Suspension wurde unter Argon-Oberlagerung bei 87°C Innentemperatur (leichter Rückfluß) kräftig gerührt. Nach 2 Stunden wurden noch weitere 39 mL Toluol und 117 mL Dioxan auf Grund der hohen Viskosität zugegeben. Nach 6 Stunden wurden weitere 0.36 g **M1** zugesetzt. Nach weiteren 30 Minuten Erhitzen wurden 0.5 mL Brombenzol zugesetzt und noch 15 Minuten zum Rückfluß erhitzt.
Die Reaktionslösung wurde mit 500 mL Toluol verdünnt und mit 100 mL 2%iger wäßriger NaCN 3h ausgerührt. Die organische Phase wurde 3 x mit $H_2O$ gewaschen und durch Zusetzen in 2500 mL Methanol gefällt. Das Polymer wurde in 1500 mL THF 1h bei 50°C gelöst, mit 3000 mL MeOH ausgefällt, gewaschen und im Vakuum getrocknet. In 1500 mL THF/ 3000 mL Methanol wurde ein weiteres Mal umgefällt, abgesaugt und bis zur Massenkonstanz getrocknet. Man erhielt 27.005 g (45.3 mmol, 90.6 %) des Polymeren **P2** als leicht gelblichen Feststoff.
$^1H$ NMR ($C_2D_2Cl_4$): 7:9-6.8 (m, 10.4 H, Fluoren, Spiro, TAD); 6.6 (br. s, 0.8H, Fluoren), 6.21 (m, 1 H, Spiro); 4.0-3.4 (3 x m, 5.6 H, $OCH_2$), 2.16 (s, 1.2 H, $CH_3$); 1.9-0.7 (m, Alkyl H, darunter bei 1.30 t-Butyl).
GPC: THF; 1 mL/min. PLgel 10μm Mixed-B 2 x 300 x 7.5 $mm^2$, 35°C, RI Detektion:
Mw = 630000 g/mol, Mn = 240000 g/mol.

*Beispiel P3: Verwendung von Toluol/Dioxan Gemisch und 0.1 mol% Pd mit Thiophen-haltigen Monomeren. Copolymerisation von 50 mol% 2', 3', 6', 7'-Tetra(2-methylbutyloxy)spirobifluoren-2, 7-bisboronsäureethylenglycolester (M1), 35 mol% 4, 7-Dibrom-benzo[1,2,]thiadiazol (M4), 10 mol% N,N'-Bis(4-bromophenyl)-N,N'-bis(4-tert-butylphenyl)benzidin (M3) und 5 mol% Bis-4, 7-(2'-brom-5'-thienyl)-2, 1,3-benzothiadiazol (M5) (Polymer P3)*

8.0065 g (10.00 mmol) **M1** (99.4%ig), 2.0578 g (7 mmol) **M4** (99.8%ig), 1.5173 g (2.00 mmol) **M3** (99.5%ig), 0.4582 g (1.00 mmol) **M5** (99.8%ig), 10.13 g (44.00 mmol) $K_3PO_4 \cdot H_2O$, 25 mL Toluol, 75 mL Dioxan, und 50 mL Wasser wurden 30 min durch Durchleiten von Argon entgast. Anschließend wurde 36.5 mg (120 μmol) Tris-o-tolylphosphin und 5 Minuten später 4.49 mg (20 μmol) Palladiumacetat unter Schutzgas zugegeben. Die Suspension wurde unter Argon-Überlagerung bei 87°C Innentemperatur (leichter Rückfluß) kräftig gerührt. Nach 30 Minuten wurden noch weitere 40 mL Toluol und nach 90 Minuten noch 30 mL Toluol auf Grund der hohen Viskosität zugegeben. Nach 6 Stunden wurden weitere 0.2 g **M1** zugesetzt. Nach weiteren 30 Minuten Erhitzen wurden 0.3 mL Brombenzol zugesetzt und noch 15 Minuten zum Rückfluß erhitzt.
Die Reaktionslösung wurde mit 200 mL Toluol verdünnt und mit 100 mL 2%iger wäßriger NaCN 3h ausgerührt. Die organische Phase wurde 3 x mit $H_2O$ gewaschen und durch Zusetzen in 1000 mL Methanol gefällt. Das Polymer wurde

in 600 mL THF 1h bei 50°C gelöst, mit 1200 mL MeOH ausgefällt, gewaschen und im Vakuum getrocknet. In 600 mL THF/ 1200 mL Methanol wurde ein weiteres Mal umgefällt, abgesaugt und bis zur Massenkonstanz getrocknet. Man erhielt 8.65 g (18.8 mmol, 94.2 %) des Polymeren **P3** als tief roten Feststoff.
$^1$H NMR ($CDCl_3$): 8.2-6.8 (m, 7.4 H, Spiro, TAD, Benzothiadiazol und Thiophen); 6.6 (br. s, 0.8H, Fluoren), 6.21 (m, 1 H, Spiro); 4.0-3.4 (2 x m, 4 H, $OCH_2$); 1.9-0.7 (m, Alkyl H, darunter bei 1.24 t-Butyl).
GPC: THF; 1 mL/min, PLgel 10μm Mixed-B 2 x 300 x 7.5 mm$^2$, 35°C, RI Detektion:
Mw = 470000 g/mol, Mn = 163000 g/mol.

*Beispiel P4: Copolymer in 2 Stufen zum Polymer mit blockförmiger Struktur. 1. Stufe Copolymerisation von 12. 5 mol% 2',3',6',7'- Tetra(2-methylbutyloxy)spirobifluoren-2, 7-bisboronsäureethylenglycolester (M1) und 10 mol% N,N'-Bis (4-bromophenyl)-N,N'-bis(4-tert-butylphenyJ)benzidin (M3).* 2. *Stufe Zugabe von 37.5 mol% 2',3',6',7'-Tetra(2-methylbuiyloxy)spirobifluoren-2, 7 bisboronsäureethylenglycolester (M1) und 40 mol% 2,7-Dibrom-9-(2',5'-dimethyl-phenyl)-9-[3",4"-bis(2-methyl-butyloxy)phenyl]fluoren (M2) (**Polymer P4**)*

0.8007 g (1.00 mmol) **M1** (99.4%ig), 0.6069 g (0.80 mmol) **M3** (99.5%ig), 3.91 g (17.00 mmol) $K_3PO_4.H_2O$, 2.5 mL Toluol, 7.5 mL Dioxan, und 8.5 mL Wasser wurden 30 min durch Durchleiten von Argon entgast. Anschließend wurden 3.65 mg (12 μmol) Tris-o-tolylphosphin und 5 Minuten später 0.45 mg (2.0 μmol) Palladiumacetat unter Schutzgas zugegeben. Die Suspension wurde unter Argon-Überlagerung bei 87°C Innentemperatur (leichter Rückfluß) 2 Stunden kräftig gerührt. Laut NMR waren noch 20% der ursprünglichen Boronsäureethylenglykolester-Gruppen noch vorhanden (Signal bei 4.28 ppm in $CDCl_3$), was durch die Stöchiometrie auch erwartet wurde. Dann wurde noch 2.4020 g (3.00 mmol) **M1** (99.4%ig), 2.1649 g (3.2 mmol) **M2** (99.85%ig), 10 mL Toluol und 30 mL Dioxan zugegeben. Nach 2 Stunden wurden weitere 12.5 mL Toluol und 37.5 mL Dioxan auf Grund der hohen Viskosität zugegeben. Nach 6 Stunden wurden weitere 0.30 g **M1** zugesetzt. Nach weiteren 1 h Erhitzen wurden 0.3 mL Brombenzol zugesetzt und noch 1 h zum Rückfluß erhitzt.
Die Reaktionslösung wurde mit 200 mL Toluol verdünnt, die Lösung wurde mit 100 mL 1 %iger wäßriger NaCN 3h ausgerührt. Die organische Phase wurde 3x mit $H_2O$ gewaschen und durch Zusetzen in 400 mL Methanol gefällt. Das Polymer wurde in 300 mL THF 1h bei 50°C gelöst, mit 600 mL MeOH ausgefällt, gewaschen und im Vakuum getrocknet. In 300 mL THF/ 600 mL Methanol wurde ein weiteres Mal umgefällt, abgesaugt und bis zur Massenkonstanz getrocknet. Man erhielt 4.23 g (7.10 mmol, 88.7 %) des Polymeren **P4** als leicht gelblichen Feststoff.
$^1$H NMR ($C_2D_2Cl_4$): 7.8-7.7 (m, 1 H, Spiro); 7.7-7.1 (m, 9.4 H, Fluoren, Spiro, TAD); 6.6 (br. s, 0.8H, Fluoren), 6.21 (m, 1 H, Spiro, zeigt zusätzliches großes Signal bei 6.27 ppm was TAD-Spiro-TAD Einheiten zuzuordnen ist, Beweis von blockförmigen Strukturen); 4.0-3.4 (3 x m, 5.6 H, $OCH_2$), 2.16 (s, 1.2 H, $CH_3$); 1.9-0.7 (m, Alkyl H, darunter bei 1.30 t-Butyl).
GPC: THF; 1 mL/min, PLgel 10μm Mixed-B 2 x 300 x 7.5 mm$^2$, 35°C, RI Detektion:
Mw = 480000 g/mol, Mn = 150000 g/mol.

*Beispiel P5: Verwendung von Dioxan/Toluol Gemisch mit 0.0125 mol% Pd, reinere Charge des Monomers M1. Copolymerisation von 50 mol% 2',3',6',7'- Tetra(2-methylbutyloxy)spirobifluoren-2,7-bisboronsäureethylenglycolester (M1), 40 mol% 2,7 Dibrom-9-(2;5'-dimethyl-phenyl)-9-[3';4"-bis(2-methyl-butyloxy)phenyl]fluoren (M2) und 10 mol% N,N=Bis(4-bromophenyl)-N,N'-bis(4-tert-butylphenyl)benzidin (M3) (**Polymer P5**).*

2.1649 g (3.20 mmol) **M2** (99.85%ig), 3.2026 g (4.00 mmol) **M1** (99.8%ig), 0.6069 g (0.80 mmol) **M3** (99.5%ig), 3.91 g (17.0 mmol) $K_3PO_4 \cdot H_2O$, 12.5 mL Toluol, 37.5 mL Dioxan, und 6.8 mL Wasser wurden 30 min durch Durchleiten von Argon entgast. Anschließend wurde 3.65 mg (12 μmol) Tris-o-tolylphosphin und 5 Minuten später 0.45 mg (2 μmol) Palladiumacetat unter Schutzgas zugegeben. Die Suspension wurde unter Argon-Überlagerung bei 87°C Innentemperatur (leichter Rückfluß) kräftig gerührt. Nach 2 Stunden wurden noch weitere 12.5 mL Toluol und 37.5 mL Dioxan auf Grund der hohen Viskosität zugegeben. Nach 6 Stunden wurden weitere 0.03 g **M1** zugesetzt. Nach weiteren 30 Minuten Erhitzen wurden 0.1 mL Brombenzol zugesetzt und noch 15 Minuten zum Rückfluß erhitzt.
Die Reaktionslösung wurde mit 80 mL Toluol verdünnt und mit 100 mL 2%iger wäßriger NaCN 3h ausgerührt. Die organische Phase wurde 3x mit $H_2O$ gewaschen und durch Zusetzen in 400 mL Methanol gefällt. Das Polymer wurde in 300 mL THF 1 h bei 50°C gelöst, mit 600 mL MeOH ausgefällt, gewaschen und im Vakuum getrocknet. In 300 mL THF/ 600 mL Methanol wurde ein weiteres Mal umgefällt, abgesaugt und bis zur Massenkonstanz getrocknet. Man erhielt 4.44 g (7.45 mmol, 93.0 %) des Polymeren **P5** als leicht gelben gelblichen Feststoff.
$^1$H NMR ($C_2D_2Cl_4$): 7.9-6.8 (m, 10.4 H, Fluoren, Spiro, TAD); 6.6 (br. s, 0.8H, Fluoren), 6.21 (m, 1 H, Spiro); 4.0-3.4 (3 x m, 5.6 H, $OCH_2$), 2.16 (s, 1.2 H, $CH_3$); 1.9-0.7 (m, Alkyl H, darunter bei 1.30 t,Butyl).
GPC: THF; 1 mL/min, PLgel 10μm Mixed-B 2 x 300 x 7.5 mm$^2$, 35°C, RI Detektion:
Mw = 1400000 g/mol, Mn = 410000 g/mol, entspricht Gewichtsmittel-Polymerisationsgrad $DP_w$ von 2350.

Teil B Vergleichsbeispiele, nicht Gegenstand dieser Erfindung.

*Vergleichsbeispiel V1: Verwendung von Toluol und Triphenylphosphin als Ligand, Ethanol als Phasenübergangsreagenz. Copolymerisation von 50 mol% 2',3',6',7'-Tetra(2-methylbutyloxy)spirobifluoren-2, 7 bisboronsäureethylenglycolester (M1), 40 mol% 2, 7-Dibrom-9-(2', 5' -dimethyl-phenyl)-9-[3"; 4"-bis(2-methyl-butyloxy)phenyl]fluoren (M2) und 10 mol% N,N'-Bis(4-bromophenyl)-N,N'-bis(4-tert-butylphenyl)benzidin (M3) (Polymer V1).*

2.000g (2.4979 mmol) **M1** (99.4%ig), 1.3519 g (1.9983 mmol) **M2** (99.85%ig), 0.3789 g (0.4995 mmol) **M3** (99.5%ig), 2.07 g (8.994 mmol) $K_3PO_4$-$H_2O$, 6 mL Toluol, 3.8 mL $H_2O$, 0.2 mL Ethanol wurden 30 min durch Durchleiten von Argon entgast. Anschließend wurde 58 mg (0.0499 mmol) Tetrakis(triphenylphosphino)palladium(0) unter Schutzgas zugegeben. Die Suspension wurde unter Argon-Überlagerung bei 87°C Innentemperatur (leichter Rückfluß) kräftig gerührt. Nach 7 Tagen war die Reaktion dunkelgrau und es wurden weitere 0.2 g **M1** zugesetzt. Nach weiteren 2 Stunden Erhitzen wurden 0.3 mL Brombenzol zugesetzt und noch 1 Stunde zum Rückfluß erhitzt.
Die Reaktionslösung wurde mit 120 mL Toluol verdünnt und mit 100 mL 2%iger wäßriger NaCN 3h ausgerührt. Die organische Phase wurde 3 x mit $H_2O$ gewaschen und durch Zusetzen in 200 mL Methanol gefällt. Das Polymer wurde in 100 mL THF gelöst, mit 200 mL MeOH ausgefällt, gewaschen und im Vakuum getrocknet. In 100 mL THF/ 200 mL Methanol wurde ein weiteres Mal umgefällt, abgesaugt und bis zur Massenkonstanz getrocknet. Man erhielt 2.07 g (3.48 mmol, 69.6 %) des Polymeren **V1** als gelben Feststoff.
$^1H$ NMR ($C_2D_2Cl_4$): 7.9-6.8 (m, 10.4 H, Fluoren, Spiro, TAD); 6.6 (br. s, 0.8H, Fluoren), 6.21 (m, 1 H, Spiro); 4.0-3.4 (3 x m, 5.6 H, $OCH_2$), 2.16 (s, 1.2 H, $CH_3$); 1.9-0.7 (m, Alkyl H, darunter bei 1.30 t-Butyl).
GPC: THF; 1 mL/min, PLgel 10μm Mixed-B 2 x 300 x 7.5 $mm^2$, 35°C, RI Detektion:
Mw = 25000 g/mol, Mn = 10400 g/mol.

*Vergleichsbeispiel V2: Verwendung von Toluol als Lösungsmittel, Triphenylphosphin als Ligand und Tetraethylammoniumhydroxid als Base gemäß WO 00/53656. Copolymerisation von 50 mol%* 2;3;6;*7'-Tetra(2-methylbutyloxy)spirobifluoren-2, 7 bisboronsäureethylenglycolester (M1) und* 50 *mol% 2, 7-Dibrom-9-(2',5'-dimethyl phenyl)-9-[3", 4"-bis (2-methyl-butyloxy)phenyl]fluoren (M2) (Polymer V2).*

3.3827 g (5.00 mmol) **M2** (99.85%ig), 4.0033 g (5.00 mmol) **M1** (99.4%ig), 17.3 mg (15 μmol) Tetrakis(triphenylphosphino)palladium(0) und 62.5 mL Toluol wurden 10 min durch Durchleiten von Argon entgast. Anschließend wurde 8.32 g (22.5 mmol) 40%ige wässrige Tetraethylammoniumhydroxidlösung und 8.32 mL Wasser unter Schutzgas zugegeben. Die Suspension wurde unter Argon-Überlagerung auf 87°C Innentemperatur erwärmt, wobei ein weißer Feststoff ausfiel, welcher nach wenigen Minuten bis auf einen Rest am Kolbenrand wieder in Lösung ging. Nach 2 Stunden Rückfluß wurde 1 mL Brombenzol zugesetzt. Nach einer weiteren Stunde wurde 1.5 g Phenylboronsäure zugesetzt und noch 1 h zum Rückfluß erhitzt.
Die Reaktionslösung wurde in 400 mL Methanol gefällt, abfiltriert und mit Wasser und Methanol nachgewaschen. Das Polymer wurde in 200 mL Toluol gelöst und in 400 mL MeOH gefällt, gewaschen und im Vakuum bis zur Massenkonstanz getrocknet. Man erhielt 5.52 g (9.39 mmol, 93.9 %) des Polymeren **V2** als gelbgrauen Feststoff.
$^1H$ NMR ($C_2D_2Cl_4$): 7.8-7.1 (m, 9 H, Fluoren, Spiro); 6.6 (br. s, 1 H, Fluoren), 6.21 (m, 1 H, Spiro); 4.0-3.4 (3 x m, 6 H, $OCH_2$), 2.16 (s, 1.5 H, $CH_3$), 1.9-0.7 (m, Alkyl H). GPC: THF; 1 mL/min, PLgel 10μm Mixed-B 2 x 300 x 7.5 $mm^2$, 35°C, RI Detektion:
Mw = 149000 g/mol, Mn = 44000 g/mol.

**Teil C: Herstellung und Charakterisierung von LEDs:**

Die Herstellung von LEDs erfolgte nach dem im folgenden skizzierten allgemeinen Verfahren. Dieses mußte natürlich im Einzelfall auf die jeweiligen Gegebenheiten (z. B. Polymerviskosität und optimale Schichtdicke des Polymers im Device) angepaßt werden. Die im nachfolgenden beschriebenen LEDs waren jeweils Zweischichtsysteme, d. h. Substratl/ITO/IPEDOT//Polymerl/Kathode.
PEDOT ist ein Polythiophen-Derivat.

**Allgemeines Verfahren zur Herstellung von hocheffizienten, langlebigen LEDs:**

Nachdem man die ITO-beschichteten Substrate (z. B. Glasträger, PET-Folie.) auf die richtige Größe zugeschnitten hat, werden sie in mehreren Reinigungsschritten im Ultraschallbad gereinigt (z.B. Seifenlösung, Millipore-Wasser, Isopropanol).
Zur Trocknung werden sie mit einer $N_2$-Pistole abgepustet und in einem Exsikkator gelagert. Vor der Beschichtung mit dem Polymer werden sie mit einem Ozon-Plasma-Gerät für ca. 20 Minuten behandelt. Von dem jeweiligen Polymer wird

eine Lösung (in der Regel mit einer Konzentration von 4-25 mg/mL in beispielsweise Toluol, Chlorbenzol, Xylol:Cyclohexanon (4:1)) angesetzt und durch Rühren bei Raumtemperatur gelöst. Je nach Polymer kann es auch vorteilhaft sein, für einige Zeit bei 50 - 70°C zu rühren. Hat sich das Polymer vollständig gelöst, wird es durch einen 5μm Filter filtriert und bei variablen Geschwindigkeiten (400-6000) mit einem Spin-coater aufgeschleudert. Die Schichtdicken können dadurch im Bereich von ca. 50 und 300nm variiert werden. Vorab wird meist auf das (strukturierte) ITO ein leitfähiges Polymer, bevorzugt gedoptes PEDOT oder PANI aufgebracht.
Auf die Polymerfilme werden noch Elektroden aufgebracht. Dies geschieht in der Regel durch thermisches Verdampfen (Balzer BA360 bzw. Pfeiffer PL S 500). Anschließend wird die durchsichtige ITO-Elektrode als Anode und die Metallelektrode (z. B. Ba, Yb, Ca) als Kathode kontaktiert und die Device-Parameter bestimmt. Die Lebensdauer wird definiert als die Zeit zur Erreichung von 50% der ursprünglichen Helligkeit und wird bei 100 $cd/m^2$ gemessen.
Die mit den beschriebenen Polymeren erhaltenen Resultate sind in der Tabelle 1 zusammengefaßt.

| | Anteil der Monomere in der Polymerisation [%] | | | | GPC* | | Elektrolumineszenz** | | | | | Visco.*** |
|---|---|---|---|---|---|---|---|---|---|---|---|---|
| Polymer (Typ) | Monom. 1 | Monom. 2 | Monom. 3 | Monom. 4 | $M_W$ (1000 g/mol) | $M_N$ (.1000 g/mol) | $\lambda_{max}$ ; [nm] | Max. Eff. [Cd/A] | Spannung bei 100Cd/$m^2$ [V] | EL-Farbe | Lebensdauer bei 100 Cd/$m^2$ [Stunden] | 10 mg/mL in Toluol (cPs) |
| P1 | 50% M1 | 50% M2 | - | - | 814 | 267 | 455 | 1.0 | 5.2 | Tief-blau | 1500 | 298 |
| P2 | 50% M1 | 40% M2 | 10% M3 | - | 630 | 240 | 462 | 2.5 | 5.0 | Blau | 3000 | 6.8 |
| P3 | 50% M1 | 35% M4 | 10% M3 | 5% M5 | 470 | 163 | 632 | 1.8 | 3.5 | Rot | 8000 | 5.5 |
| P4, 1. Stufe | 12.5% M1 | - | 10% M3 | - | - | - | - | - | - | - | - | - |
| P4, 2. Stufe | 37.5% M1 | 40% M2 | - | - | 480 | 150 | 455 | 1.8 | 4.5 | Tief-blau | 3500 | 6.3 |
| P5 | 50% M1 | 40% M2 | 10% M3 | - | 1400 | 410 | 457 | 2.7 | 4.2 | Blau | 4000 | 76 |
| V1 | 50% M1 | 40% M2 | 10% M3 | - | 25 | 10 | 475 | 1.1 | 7.7 | Weiss-blau | 20 | 0.9 |
| V2 | 50% M1 | 50% M2 | - | - | 149 | 50 | 470 | 0.6 | 6.2 | Weiss-blau | 100 | 1.8 |

* GPC Messungen THF; 1 mL/min, Plgel 10µm Mixed-B 2 x 300 x 7.5 $mm^2$, 35°C, RI Detektion wurde gegen Polystyrol geeicht

** Zur Herstellung der Polymer LEDs, siehe Teil C

*** Viskosität der Polymerlösungen bei 10mglmL in Toluol wurde bei 40 $s^{-1}$ in einem Brookfield LVDV-III Rheometer (CP-41) gemessen

**Patentansprüche**

1. Verfahren zur Umsetzung einer Halogen- oder Sulfonyloxy-funktionellen Aryl- oder Heteroarylverbindung mit einer aromatischen oder heteroaromatischen Borverbindung in Gegenwart einer katalytischen Menge einer Palladiumverbindung, einer Base und eines mehrphasigen Lösungsmittelgemisches, unter Bildung einer Aryl-Aryl- oder Aryl-Heteroaryl- oder Heteroaryl-Heteroaryl-C-C-Bindung, **dadurch gekennzeichnet,**

    a. **daß** das Lösemittelgemisch jeweils mindestens 0.1Vol% einer Verbindung der folgenden Gruppen

        i) mit Wasser mischbare organische Lösungsmittel
        ii) mit Wasser unmischbare organische Lösungsmittel
        iii) Wasser

    enthält, mit der Maßgabe, daß sowohl Alkohole als auch Carbonylverbindungen, die a-Wasserstoff-Atome enthalten, ausgeschlossen sind;
    b. und **daß** die Palladiumverbindung kein Triphenylphosphin enthält bzw. der Reaktionsmischung dieses nicht extra zugesetzt wird.

2. Verfahren gemäß Anspruch 1 **dadurch gekennzeichnet, daß** die Aryl- bzw. Heteroarylverbindungen bzw. die aromatischen oder heteroaromatischen Reste der entsprechenden Borverbindungen, Aromaten bzw. Heteroaromaten mit 2 bis 40 C-Atomen, welche mit einem oder auch mehreren linearen, verzweigten oder cyclischen Alkyl- bzw. Alkoxyresten mit 1 bis 20 C-Atomen, bei denen wiederum eine oder mehrere $CH_2$-Gruppen die nicht aufeinander folgen durch O, S, C=O, oder eine Carboxygruppe ersetzt sein können, substituierte oder unsubstituierte C-2 bis C-20 Aryl- oder Heteroarylresten, Fluor, Cyano, Nitro, Sulfonsäurederivaten substituiert sein können oder auch unsubstituiert sein können, bedeuten.

3. Verfahren gemäß Anspruch 1 und/oder 2 **dadurch gekennzeichnet, daß** Halogen-oder Sulfonyloxy-funktionalisierte Aryl- oder Heteroarylverbindungen der Formel (I) verwendet werden,

$$Ar\text{-}(X)_n \qquad (I)$$

    worin
    Ar ein Aryl- bzw. Heteroarylrest wie in Anspruch 2 definiert ist,
    X -Cl, -Br, -I, $-OS(O)_2R^1$ bedeutet,
    und $R^1$ ein Alkyl-, Aryl- oder fluorierte Alkylrest ist,
    und n mindestens 1, bevorzugt 1 bis 20 bedeutet.

4. Verfahren gemäß einem oder mehreren der Ansprüche 1 bis 3 **dadurch gekennzeichnet, daß** aromatische bzw. heteroaromatische Borverbindungen der allgemeinen Formel (II) verwendet werden,

$$Ar\text{-}(BQ_1Q_2)_m \qquad (II)$$

    worin
    Ar ein Aryl- bzw. Heteroarylrest wie oben definiert ist,
    $Q_1$ und $Q_2$ gleich oder verschieden -OH, $C_1$-$C_4$-Alkoxy, $C_1$-$C_4$-Aryloxy, $C_1$-$C_4$-Alkyl" oder Halogen bedeuten, oder $Q_1$ und $Q_2$ zusammen eine C1-C4-Alkylendioxy-Gruppe, die gegebenenfalls durch ein oder mehrere C1-C4-Alkylgruppen substituiert sein kann, bilden, oder $Q_1$ und $Q_2$ und das Boratom zusammen Teil eines Boroxinrings der Formel (III), sind,

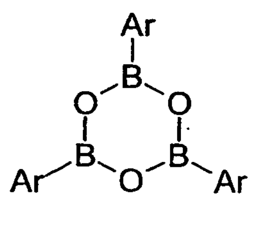

(III)

und m mindestens 1, bevorzugt 1 bis 20 bedeutet.

5. Verfahren gemäß einem oder mehreren der Ansprüche 1 bis 4 **dadurch gekennzeichnet, daß** die Palladiumverbindung aus einer Palladiumquelle und eventuell einer oder mehrerer zusätzlicher Komponenten besteht,
wobei die Palladiumquelle entweder Salze des Palladiums(II) oder Palladium(O)verbindungen bzw. Komplexe oder auch metallisches Palladium bedeutet,
und die zusätzliche Komponente Liganden, die an das Palladiummetallzentrum koordinieren können, sind.

6. Verfahren gemäß einem oder mehreren der Ansprüche 1 bis 5 **dadurch gekennzeichnet, daß** als zusätzliche Komponente Phosphin-Liganden aus der Gruppe der Tri-Aryl-Phosphine, Di-Aryl-Alkyl-Phosphine, Aryl-Dialkyl-Phosphine, Trialkyl-Phosphine, Tri-Heteroaryl-Phosphine, Di-Heteroaryl-Alkyl-Phosphine, Heteroaryl-Dialkyl-Phosphine, wobei die Substituenten am Phosphor gleich oder verschieden, chiral oder achiral sein können, wobei ein oder mehrere der Substituenten die Phosphorgruppen mehrerer Phosphine verknüpfen können und wobei ein Teil dieser Verknüpfungen auch ein oder mehrere Metallatome sein können, verwendet werden, mit der Ausnahme, daß Triphenylphosphin nicht verwendet wird.

7. Verfahren gemäß einem oder mehreren der Ansprüche 1 bis 6 **dadurch gekennzeichnet, daß** als Wasser mischbares organisches Lösungsmittel, mindestens ein Lösungsmittel, welches sowohl beim Vorliegen von mindestens 5 Gewichts-% Wasser im Lösungsmittel, als auch beim Vorliegen von mindestens 5 Gewichts-% Lösungsmittel in Wasser bei Raumtemperatur eine klare einphasige Lösung bildet, eingesetzt wird.

8. Verfahren gemäß einem oder mehreren der Ansprüche 1 bis 7 **dadurch gekennzeichnet, daß** als Wasser unmischbares organisches Lösungsmittel, mindestens ein Lösungsmittel; welches bereits beim Vorliegen von weniger als 5 Gewichts-% Wasser im Lösungsmittel, oder bereits beim Vorliegen von weniger als 5 Gewichts-% Lösungsmittel in Wasser bei Raumtemperatur keine klare einphasige Lösung mehr bildet, d. h. hier bereits eine Phasentrennung zu erkennen ist, verwendet wird.

9. Verfahren gemäß einem oder mehreren der Ansprüche 1 bis 8 **dadurch gekennzeichnet, daß** dabei eine Umsetzung einer multifunktionellen Verbindung mit mehreren monofunktionellen Verbindungen zu einer definierten "niedermolekularen" Verbindung durchgeführt wird.

10. Verfahren gemäß einem oder mehreren der Ansprüche 1 bis 8 **dadurch gekennzeichnet, daß** dabei (mindestens) zwei verschiedene multifunktionelle Verbindungen miteinander in Reaktion gebracht werden und ein Produkt mit polymerem Charakter erhalten wird.

11. Verfahren gemäß Anspruch 10 **dadurch gekennzeichnet, daß** die Polymerisation in mindestens zwei Stufen durchgeführt wird, wobei in der ersten Stufe ein Überschuß an einem der Monomeren eingesetzt wird, so daß ein kurzkettiges Polymer mit einer ersten Zusammensetzung gebildet wird und darauf folgend in einer oder mehrerer weiteren Stufe(n) die restlichen Monomere zugegeben werden, so daß schließlich das Verhältnis der Bor-haltigen reaktiven Gruppen und Halogen- bzw. Sulfonyloxy-haltigen reaktiven Gruppen 1:1 beträgt.

12. Verfahren gemäß Anspruch 11 **dadurch gekennzeichnet, daß** die Monomerzusammensetzung der zweiten bzw. weiterer Stufen unterschiedlich zu derjenigen der ersten Stufe ist, wodurch Polymere entstehen, die eine blockartige Struktur aufweisen.

13. Poly-Arylen- oder heteroarylen mit einem Gewichtsmittel-Polymerisationsgrad $DP_w$ von mindestens 1000, erhältlich durch ein Verfahren gemäß einem oder mehreren der Ansprüche 1 bis 12.

14. Verwendung der Polymeren gemäß Anspruch 13, in elektronischen Bauteilen.

15. Elektronische Bauteile enthaltend ein oder mehrere Polymere gemäß Anspruch 13.

## Claims

1. Process for the reaction of a halogen- or sulfonyloxy-functional aryl or heteroaryl compound with an aromatic or heteroaromatic boron compound in the presence of a catalytic amount of a palladium compound, a base and a multiphase solvent mixture, with formation of an aryl-aryl or aryl-heteroaryl or heteroaryl-heteroaryl C-C bond, **char-**

**acterised in that**

a. the solvent mixture in each case comprises at least 0.1 % by vol. of a compound from the following groups

i) water-miscible organic solvents
ii) water-immiscible organic solvents
iii) water,

with the proviso that both alcohols and carbonyl compounds containing α-hydrogen atoms are excluded;
b. and **in that** the palladium compound does not contain triphenylphosphine or the latter is not added separately to the reaction mixture.

**2.** Process according to Claim 1, **characterised in that** the aryl or heteroaryl compounds or the aromatic or heteroaromatic radicals of the corresponding boron compounds denote aromatic or heteroaromatic compounds having 2 to 40 C atoms, which may be substituted by one or more linear, branched or cyclic alkyl or alkoxy radicals having 1 to 20 C atoms, in which one or more non-consecutive $CH_2$ groups may in turn be replaced by O, S, C=O or a carboxyl group, substituted or unsubstituted C-2 to C-20 aryl or heteroaryl radicals, fluorine, cyano, nitro or sulfonic acid derivatives or may also be unsubstituted.

**3.** Process according to Claim 1 and/or 2, **characterised in that** use is made of halogen- or sulfonyloxy-functionalised aryl or heteroaryl compounds of the formula (I)

$$Ar\text{-}(X)_n \qquad (I)$$

in which
Ar is an aryl or heteroaryl radical as defined in Claim 2,
X denotes -Cl, -Br, -I or $-OS(O)_2R^1$,
and $R_1$ is an alkyl, aryl or fluorinated alkyl radical,
and n denotes at least 1, preferably 1 to 20.

**4.** Process according to one or more of Claims 1 to 3, **characterised in that** use is made of aromatic or heteroaromatic boron compounds of the general formula (II)

$$Ar\text{-}(BQ_1Q_2)_m \qquad (II)$$

in which
Ar is an aryl or heteroaryl radical as defined above,
$Q_1$ and $Q_2$, identically or differently, denote -OH, $C_1$-$C_4$-alkoxy, $C_1$-$C_4$-aryloxy, $C_1$-$C_4$-alkyl or halogen, or $Q_1$ and $Q_2$ together form a $C_1$-$C_4$-alkylene-dioxy group, which may optionally be substituted by one or more $C_1$-$C_4$-alkyl groups, or $Q_1$ and $Q_2$ and the boron atom are together part of a boroxin ring of the formula (III)

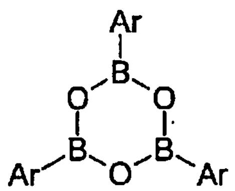

(III)

and m denotes at least 1, preferably 1 to 20.

**5.** Process according to one or more of Claims 1 to 4, **characterised in that** the palladium compound consists of a palladium source and possibly one or more additional components,
where the palladium source either denotes salts of palladium(II) or palladium(0) compounds or complexes or also metallic palladium,
and the additional components are ligands which are able to coordinate to the palladium metal centre.

**6.** Process according to one or more of Claims 1 to 5, **characterised in that** the additional components used are

phosphine ligands from the group of the triarylphosphines, diarylalkylphosphines, aryldialkylphosphines, trialkylphosphines, triheteroarylphosphines, diheteroarylalkylphosphines, heteroaryldialkylphosphines, where the substituents on the phosphorus may be identical or different, chiral or achiral, where one or more of the substituents may link the phosphorus groups of a plurality of phosphines and where some of these links may also be one or more metal atoms, with the exception that triphenylphosphine is not used.

**7.** Process according to one or more of Claims 1 to 6, **characterised in that** the water-miscible organic solvent employed is at least one solvent which forms a clear single-phase solution at room temperature both in the presence of at least 5% by weight of water in the solvent and in the presence of at least 5% by weight of solvent in water.

**8.** Process according to one or more of Claims 1 to 7, **characterised in that** the water-immiscible organic solvent used is at least one solvent which no longer forms a clear single-phase solution at room temperature, i.e. phase separation is already evident here, even in the presence of less than 5% by weight of water in the solvent or even in the presence of less than 5% by weight of solvent in water.

**9.** Process according to one or more of Claims 1 to 8, **characterised in that** a reaction of a multifunctional compound with a plurality of monofunctional compounds is carried out to give a defined "low-molecular-weight" compound.

**10.** Process according to one or more of Claims 1 to 8, **characterised in that** (at least) two different multifunctional compounds are reacted with one another, and a product having a polymeric character is obtained.

**11.** Process according to Claim 10, **characterised in that** the polymerisation is carried out in at least two steps, where, in the first step, an excess of one of the monomers is employed, so that a short-chain polymer having a first composition is formed, and subsequently, in one or more further step(s), the remaining monomers are added, so that finally the ratio of the boron-containing reactive groups and halogen- or sulfonyloxy-containing reactive groups is 1:1.

**12.** Process according to Claim 11, **characterised in that** the monomer composition in the second or further steps is different to that in the first step, resulting in the formation of polymers which have a block-like structure.

**13.** Polyarylene or polyheteroarylene having a weight average degree of polymerisation $DP_w$ of at least 1000, obtainable by a process according to one or more of Claims 1 to 12.

**14.** Use of the polymers according to Claim 13 in electronic components.

**15.** Electronic components containing one or more polymers according to Claim 13.

## Revendications

**1.** Procédé pour la réaction d'un composé aryle ou hétéroaryle halogène- ou sulfonyloxy-fonctionnel avec un composé de bore aromatique ou hétéroaromatique en présence d'une quantité catalytique d'un composé de palladium, d'une base et d'un mélange de solvants multiphase, moyennant la formation d'une liaison C-C aryle-aryle ou aryle-hétéroaryle ou hétéroaryle-hétéroaryle, **caractérisé en ce que** :

a. le mélange de solvants comprend dans chaque cas au moins 0,1% en volume d'un composé pris parmi les groupes qui suivent

i) des solvants organiques miscibles à l'eau
ii) des solvants organiques non miscibles à l'eau
iii) de l'eau,

étant entendu qu'à la fois des alcools et des composés de carbonyle contenant des atomes de $\alpha$-hydrogène sont exclus ;
b. et **en ce que** le composé de palladium ne contient pas de triphénylphosphine ou que cette dernière n'est pas ajoutée séparément au mélange de réaction.

**2.** Procédé selon la revendication 1, **caractérisé en ce que** les composés aryle ou hétéroaryle ou les radicaux aromatiques ou hétéroaromatiques des composés de bore correspondants représentent des composés aromatiques ou hétéroaromatiques comportant de 2 à 40 atomes de C, qui peuvent être substitués par un ou plusieurs radicaux alkyle ou alkoxy linéaires, ramifiés ou cycliques comportant de 1 à 20 atomes de C, où un ou plusieurs groupes $CH_2$ non consécutifs peuvent à leur tour être remplacés par O, S, C=O ou un groupe carboxyle, des radicaux aryle ou hétéroaryle C-2 à C-20 substitués ou non substitués, des dérivés de fluor, cyano, nitro ou d'acide sulfonique ou qui peuvent également être non substitués.

**3.** Procédé selon la revendication 1 et/ou 2, **caractérisé en ce qu'**on utilise des composés aryle ou hétéroaryle halogène- ou sulfonyloxy-fonctionnalisés de la formule (1):

$$Ar\text{-}(X)_n \qquad (I)$$

dans laquelle
Ar est un radical aryle ou hétéroaryle tel que défini selon la revendication 2, X représente -Cl, -Br, -1 ou $-OS(O)_2R^1$, et $R_1$ est un radical alkyle, aryle ou alkyle fluoré,
et n représente au moins 1, de préférence 1 à 20.

**4.** Procédé selon une ou plusieurs des revendications 1 à 3, **caractérisé en ce qu'**on utilise des composés de bore aromatiques ou hétéroaromatiques de la formule générale (II):

$$Ar\text{-}(BQ_1Q_2)_m \qquad (II)$$

dans laquelle
Ar est un radical aryle ou hétéroaryle tel que défini ci avant,
$Q_1$ et $Q_2$, de manière identique ou différente, représentent -OH, $C_1$-$C_4$-alkoxy, $C_1$-$C_4$-aryloxy, $C_1$-$C_4$-alkyle ou halogène, ou $Q_1$ et $Q_2$ forment ensemble un groupe $C_1$-$C_4$-alkylènedioxy, qui peut en option être substitué par un ou plusieurs groupes $C_1$-$C_4$-alkyle, ou $Q_1$ et $Q_2$ et l'atome de bore sont en association une partie d'un anneau de boroxine de la formule (III)

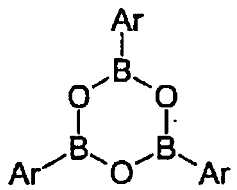

(III)

et m représente au moins 1, de préférence 1 à 20.

**5.** Procédé selon une ou plusieurs des revendications 1 à 4, **caractérisé en ce que** le composé de palladium est constitué par une source de palladium et éventuellement par un ou plusieurs composants additionnels, où la source de palladium soit représente des sels de composés ou de complexes de palladium(II) ou de palladium(0), soit également du palladium métallique, et les composants additionnels sont des ligands qui peuvent se coordonner sur le centre métallique de palladium.

**6.** Procédé selon une ou plusieurs des revendications 1 à 5, **caractérisé en ce que** les composants additionnels utilisés sont des ligands de phosphine pris parmi le groupe des ligands triarylphosphines, diarylalkylphosphines, aryldialkylphosphines, trialkylphosphines, trihétéroarylphosphines, dihétéroarylalkylphosphines, hétéroaryldialkylphosphines, où les substituants sur le phosphore peuvent être identiques ou différents, chiraux ou achiraux, où un ou plusieurs des substituants peuvent se lier sur les groupes phosphore d'une pluralité de phosphines et où certaines de ces liaisons peuvent également être un ou plusieurs atomes métalliques, à l'exception près constituée par le fait que de la triphénylphosphine n'est pas utilisée.

**7.** Procédé selon une plusieurs des revendications 1 à 6, **caractérisé en ce que** le solvant organique miscible à l'eau qui est utilisé est au moins un solvant qui forme une solution monophase claire à température ambiante à la fois en présence d'au moins 5% en poids d'eau dans le solvant et en présence d'au moins 5% en poids de solvant dans l'eau.

8. Procédé selon une ou plusieurs des revendications 1 à 7, **caractérisé en ce que** le solvant organique non miscible à l'eau utilisé est au moins un solvant qui ne forme plus une solution monophase claire à température ambiante, c'est-à-dire qu'une séparation de phase est déjà évidente à ce niveau, même en présence de moins de 5% en poids d'eau dans le solvant ou même en présence de moins de 5% en poids de solvant dans l'eau.

9. Procédé selon une ou plusieurs des revendications 1 à 8, **caractérisé en ce qu'**une réaction d'un composé multifonctionnel avec une pluralité de composés monofonctionnels est mise en oeuvre pour obtenir un composé "de poids moléculaire faible" défini.

10. Procédé selon une ou plusieurs des revendications 1 à 8, **caractérisé en ce que** (au moins) deux composés multifonctionnels différents sont amenés à réagir l'un avec l'autre, et un produit présentant un caractère polymérique est obtenu.

11. Procédé selon la revendication 10, **caractérisé en ce que** la polymérisation est mise en oeuvre selon au moins deux étapes, où, au niveau de la première étape, un excès de l'un des monomères est utilisé de telle sorte qu'un polymère en chaîne courte présentant une première composition soit formé et qu'ensuite, au niveau d'une ou de plusieurs autres étapes, les monomères restants soient ajoutés de telle sorte que pour finir, le rapport des groupes réactifs contenant du bore et des groupes réactifs contenant halogène ou sulfonyloxy soit de 1:1.

12. Procédé selon la revendication 11, **caractérisé en ce que** la composition de monomères au niveau de la seconde étape ou des autres étapes est différente de celle au niveau de la première étape, ce qui conduit à la formation de polymères qui présentent une structure similaire à un bloc.

13. Polyarylène ou polyhétéroarylène présentant un degré de polymérisation moyen en poids $DP_w$ d'au moins 1000, pouvant être obtenu au moyen d'un procédé selon une ou plusieurs des revendications 1 à 12.

14. Utilisation des polymères selon la revendication 13 dans des composants électroniques.

15. Composants électroniques contenant un ou plusieurs polymères selon la revendication 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0694530 A
- JP 2001089404 A
- US 5777070 A
- WO 9920675 A
- WO 0053656 A
- EP 842208 A
- WO 0022026 A
- WO 0046321 A
- WO 9954385 A
- WO 0055927 A
- WO 9731048 A
- WO 9739045 A
- WO 9218552 A
- WO 9507955 A
- EP 690086 A
- WO 02044060 A
- DE 10143353
- WO 02077060 A


### In der Beschreibung aufgeführte Nicht-Patentliteratur


- *Synthetic Communications,* 1981, vol. 11 (7), 513
- *Chem. Commun.,* 1997, 1598
- *J. Med. Chem.,* 1997, vol. 40 (4), 437